# EUROPÄISCHE PATENTSCHRIFT

(11) **EP 3 027 975 B1**
(45) Veröffentlichungstag und Bekanntmachung des Hinweises auf die Patenterteilung: **14.04.2021**
(21) Anmeldenummer: 14739179.1
(22) Anmeldetag: 16.07.2014
(51) Int. Cl.: F24H 1/18, F16L 59/00, F24H 1/20, F17C 3/02

(54) **WARMWASSERBEREITER**
WARM WATER PREPARER
CHAUFFE-EAU

(30) Priorität: 29.07.2013 EP 13178389
(43) Veröffentlichungstag der Anmeldung: 08.06.2016
(73) Patentinhaber: BASF SE, 67056 Ludwigshafen am Rhein (DE)
(72) Erfinder: FRICKE, Bernd, 49448 Quernheim (DE); MOHMEYER, Nils, 49076 Osnabrück (DE)
(86) Internationale Anmeldenummer: PCT/EP2014/065216
(87) Internationale Veröffentlichungsnummer: WO 2015/014615

(56) Entgegenhaltungen:
- EP-A2- 1 840 484
- EP-A2- 2 495 500
- CH-A- 183 406
- DE-A1- 4 336 190
- GB-A- 2 352 023
- US-A- 2 576 603
- US-A- 4 286 573
- US-A- 4 409 962
- US-A- 5 923 819

## Beschreibung

Die vorliegende Erfindung betrifft einen Warmwasserbereiter.

Warmwasserbereiter, weisen üblicherweise einen Grundbehälter zur Aufnahme von Wasser auf. Der Grundbehälter weist dabei einen Zulauf für zu erwärmendes Wasser und einen Ablauf für erwärmtes Wasser auf. Üblicherweise sind der Zulauf und der Ablauf als Rohre ausgebildet, die aus Metall hergestellt sind. Üblicherweise befindet sich der Ablauf in einem oberen Bereich des Grundbehälters, wie beispielsweise an einem Deckel des Grundbehälters.

Zum Erwärmen des Wassers im Inneren des Grundbehälters benötigt man eine bestimmte Menge an Energie. Im Inneren des Grundbehälters befindet daher sich üblicherweise ein Heizkörper zum Erwärmen des Wassers. Der Heizkörper ist beispielsweise eine Heizwendel für eine indirekte Beheizung oder ein Heizstab für eine direkte Beheizung des Wassers. Die dabei auftretenden Verluste, die auch Bereitschaftsenergieverrauch genannt werden, sind diejenige Energie, die nötig ist, um das Wasser auf einer vorbestimmten Temperatur zu halten.

Bedingt durch seine geringere Dichte im Vergleich zu kaltem Wasser steigt dabei warmes Wasser entgegen der Schwerkraftrichtung nach oben und gelangt somit auch in den Ablauf. Der Ablauf ist zwar üblicherweise gedämmt, es kommt aber aufgrund der schlechteren Dämmung des Ablaufs im Vergleich zu einer Dämmung des Grundbehälters zu einem erhöhten Wärmeverlust im Bereich des Ablaufs, der durch Nachheizen ausgeglichen wird. Somit steigt der Bereitschaftsenergieverbrauch.

Außerdem werden die gesetzlichen Anforderungen zur Energieeinsparung in verschiedenen Bereichen weiter verschärft. Auch für Warmwasserbereiter wird im Rahmen eines neuen Labelings für das Jahr 2015 die Einteilung in Energieeffizienzklassen im Hinblick auf den Bereitschaftsenergieverbrauch realisiert. Um diesen Anforderungen gerecht zu werden, ist eine konstruktive Optimierung des Warmwasserbereiters erforderlich, da sich die Dicke der Dämmung im Bereich des Ablaufs in vielen Fällen nicht erhöhen lässt.

Um die Wärmeverluste zu verringern, wurden verschiedene Ansätze vorgeschlagen. Die DE 1 205 017 A und die DE 195 33 388 C2 beschreiben einen Heißwasserspeicher, bei dem in einer Verbindungsleitung zwischen einem Ablaufrohr und einer Zapfstelle ein Thermosiphon angeordnet ist.

Die DE 42 18 992 C2 und die DE 43 36 190 A1 beschreiben einen Warmwasserspeicher mit einer Wärmebremse. Die Wärmebremse ist in Form eines Stutzens ausgebildet, der auf das Ablaufrohr geschraubt ist.

Die DE 10 2005 062 660 A1 beschreibt einen Warmwasser mit einem Grundbehälter. Der Grundbehälter weist eine nach außen offene Aufnahmekammer zur austauschbaren Aufnahme von Systemkomponenten auf.

Die DE 10 2007 046 905 A1 beschreibt einen Schichtspeicher mit einem Ablaufrohr, das sich im Inneren des Schichtspeichers befindet und nach unten geführt ist.

GB 235 20 23 A beschreibt einen Warmwasserspeichertank umfassend eine Warmwasserspeicherkammer, Einlass- und Auslassanschlüsse, die mit der Kammer in Verbindung stehen, und einen Isoliermantel, der sich um die Kammer erstreckt. Der Mantel umfasst Innen- und Außenwände, zwischen denen ein evakuierter Raum definiert ist. Ein Warmwasserbereiter mit den Merkmalen des Oberbegriffs von Anspruch 1 ist aus Dokument GB2352023 bekannt.

Trotz der durch diese Maßnahmen bewirkten Verbesserungen besteht nach wie vor ein Potenzial für Verbesserungen hinsichtlich der Reduzierung der Wärmeverluste von Warmwasserbereitern. So ist beispielsweise das Ablaufrohr des Schichtspeichers der DE 10 2007 046 905 A1 ganz im Inneren angeordnet, so dass nur eine Herstellung aus Metall möglich ist. Ein Anbringen und Befestigen des Ablaufrohrs an dem Schichtspeicher durch Schweißen ist bedingt durch die Position im Inneren kompliziert. Ferner hat Metall eine vergleichsweise hohe Wärmeleitfähigkeit, so dass das Ablaufrohr auch in die Umgebung außerhalb des Schichtspeichers Wärme abgibt.

Entsprechend ist es eine Aufgabe der vorliegenden Erfindung, einen Warmwasserbereiter anzugeben, der die obigen Nachteile zumindest weitgehend vermeidet und insbesondere die Wärmeverluste im Bereich des Ablaufs minimiert.

Die obige Aufgabe wird gelöst durch erfindungsgemäße Warmwasserbereiter gemäß den unabhängigen Patentansprüchen. Vorteilhafte Weiterbildungen sind in den abhängigen Patentansprüchen angegeben.

Ein erfindungsgemäßer Warmwasserbereiter weist die Merkmale des Anspruchs 1 auf.

Der Ablauf kann einen Abschnitt aufweisen, der dem Grundbehälter abgewandt ist und der sich horizontal aus der Ummantelung heraus erstreckt. Dieser Abschnitt kann sich an den vertikal nach unten erstreckenden Abschnitt anschließen. Der Ablauf ist an einer Seitenwand des Grundbehälters im Wesentlichen horizontal angebracht. Die Ummantelung umgibt den Grundbehälter zumindest an der Seitenwand. Die Ummantelung weist einen Abschnitt auf, durch den sich der Ablauf erstreckt, wobei der Abschnitt der Ummantelung im Bereich des Ablaufs dicker als andere Abschnitte der Ummantelung ist. Die Ummantelung kann einen im Wesentlichen elliptisch, insbesondere spitz-elliptisch bzw. blattförmig, geformten Außenumfang aufweisen. Der Ablauf erstreckt sich dann durch einen sich mit zunehmendem Abstand von dem Grundbehälter verjüngenden Abschnitt dieser spitz-elliptisch oder blattförmigen Form der Ummantelung. Der Ablauf kann als Rohr ausgebildet sein. Der Grundbehälter kann eine Höhe aufweisen, wobei der Ablauf an der Seitenwand an einer Position angebracht ist, die sich in einem oberen Drittel bezogen auf die Höhe des Grundbehälters befindet. Der Ablauf ist zumindest teilweise und bevorzugt vollständig aus Kunststoff hergestellt. Der Kunststoff ist ausgewählt aus der Gruppe der Polyarylsulfone. Der Ablauf kann zumindest teilweise aus Polyphenylsulfon hergestellt sein. Alternativ oder zusätzlich kann der Ablauf zumindest teilweise aus vernetztem Polyethylen hergestellt sein. Der Kunststoff kann eine Wärmeleitfähigkeit von 0,05 W/(m*K) bis 0,50 W/(m*K), bevorzugt von 0,05 W/(m*K) bis 0,40 W/(m*K) und noch bevorzugter von 0,05 W/(m*K) bis 0,30 W/(m*K) aufweisen. Alternativ kann der Ablauf zumindest teilweise aus Metall hergestellt sein.

Der Warmwasserbereiter weist einen Grundbehälter zur Aufnahme von Wasser auf. Der Grundbehälter weist mindestens einen Zulauf für zu erwärmendes Wasser und mindestens einen Ablauf für erwärmtes Wasser auf. Der Ablauf ist zumindest teilweise aus Kunststoff hergestellt.

Der Warmwasserbereiter weist weiter eine Ummantelung auf, die zumindest teilweise und bevorzugt vollständig aus einem wärmeisolierenden Material hergestellt ist und den Grundbehälter zumindest teilweise und bevorzugt vollständig umgibt. Der Ablauf erstreckt sich durch die Ummantelung. Der Ablauf weist mindestens einen Abschnitt auf, der sich innerhalb der Ummantelung im Wesentlichen vertikal nach unten erstreckt. Der Ablauf ist an einer Seitenwand des Grundbehälters im Wesentlichen horizontal angebracht. Der Ablauf kann einen

Abschnitt aufweisen, der dem Grundbehälter abgewandt ist und der sich horizontal aus der Ummantelung heraus erstreckt. Der Kunststoff ist ausgewählt aus der Gruppe der Polyarylsulfone. Der Ablauf kann zumindest teilweise aus Polyphenylsulfon hergestellt sein. Alternativ oder zusätzlich kann der Ablauf aus vernetztem Polyethylen hergestellt sein. Der Kunststoff kann eine Wärmeleitfähigkeit von 0,05 W/(m*K) bis 0,50 W/(m*K), bevorzugt von 0,05 W/(m*K) bis 0,40 W/(m*K) und noch bevorzugter von 0,05 W/(m*K) bis 0,30 W/(m*K) aufweisen. Die Ummantelung umgibt den Grundbehälter zumindest an der Seitenwand. Die Ummantelung weist einen Abschnitt auf, durch den sich der Ablauf erstreckt. Der Abschnitt der Ummantelung ist dicker als andere Abschnitte der Ummantelung. Der Abschnitt der Ummantelung kann im Bereich des Ablaufs dicker als andere Abschnitte der Ummantelung sein. Die Ummantelung kann einen im Wesentlichen elliptisch, insbesondere spitz-elliptisch bzw. blattförmig, geformten Außenumfang aufweisen. Der Ablauf erstreckt sich dann durch einen sich mit zunehmendem Abstand von dem Grundbehälter verjüngenden Abschnitt dieser spitz-elliptisch oder blattförmigen Form der Ummantelung. Der Ablauf kann als Rohr ausgebildet sein. Der Grundbehälter kann eine Höhe aufweisen. Der Ablauf kann an der Seitenwand an einer Position angebracht sein, die sich in einem oberen Drittel bezogen auf die Höhe des Grundbehälters befindet.

Die Warmwasserbereiter gemäß den unabhängigen Ansprüchen stellen Alternativlösungen für die oben beschriebene Problematik der Wärmeverluste im Bereich des Ablaufs bzw. Entnahmerohrs dar. Ein Grundgedanke der Erfindung ist, dass dieses Problem dadurch gelöst werden kann, dass man einen Abschnitt des Ablaufs innerhalb der Dämmung bzw. Ummantelung des Grundbehälters nach unten führt. Eine derartige mögliche Ausführungsform erlaubt insbesondere die Anbringung von Metallrohren an dem Grundbehälter. Zusätzlich wird dieses Problem dadurch gelöst, dass ein aus Kunststoff hergestellter Ablauf an dem Grundbehälter angebracht wird, da Kunststoff allgemein eine geringere Wärmeleitfähigkeit als Metall aufweist.

Die Ummantelung selbst kann eine Außenverkleidung aufweisen. Die Außenverkleidung ist beispielsweise auf einer dem Grundbehälter zugewandten Seite der Ummantelung und/oder einer dem Grundbehälter abgewandten Seite der Ummantelung angeordnet. Die Außenverkleidung kann beispielsweise die Ummantelung sandwichförmig umgeben. Die Außenverkleidung kann als Stahlblech, Aluminiumblech, Kunststoffdeckschichten, faserverstärkte Kunststoffdeckschichten oder dergleichen ausgebildet sein. Des weiteren können als Außenverkleidung, insbesondere auf einer dem Grundbehälter zugewandten Seite, gängige Metallfolien, wie beispielsweise auf Aluminium, und/oder Verbundfolien, wie beispielsweise Aluminium, Polyethylenterephthalat, auch in Kombination mit den weiteren Deckschichten, eingesetzt werden. Die Außenverkleidung und die Ummantelung können auch einstückig ausgebildet sein.

Der Ablauf kann auch zumindest teilweise aus Metall hergestellt sein. Das Metall kann beispielsweise Eisen, Kupfer oder dergleichen sein. Es wird explizit betont, dass im Rahmen der vorliegenden Erfindung der Ablauf auch aus einer Kombination aus Metall und Kunststoff hergestellt sein kann.

Gemäß der Erfindung wird vorgeschlagen, den Ablauf an einer Seitenwand des Grundbehälters im Wesentlichen horizontal anzubringen. Dabei wird der Ablauf von außen an der Seitenwand angebracht. Entsprechend ist das Anbringen vergleichsweise einfach, da es nicht von anderen Bauteilen behindert wird und im Vergleich zu einer Anordnung im Inneren des Grundbehälters nicht räumlich beengt ist. Entsprechend der besonderen horizontalen Anbringung ist der Ablauf senkrecht zu einer möglichen aufwärtsgerichteten Strömung des erwärmten Wassers auf Grund einer geringeren Dichte im Vergleich zu kaltem Wasser im Inneren des Grundbehälters. Somit strömt das erwärmte Wasser bei einer Aufwärts-Bewegung bzw. Bewegung nach oben im Vergleich zu einer Anbringung des Ablaufs an einem Deckel des Grundbehälters nicht komplett in den Ablauf, sondern an dem Ablauf vorbei. Bei einer solchen Bewegung gelangen damit nur diejenigen Wasserschichten in den Ablauf, die nicht die höchste Temperatur aufweisen. Dadurch wird bereits ein Temperaturunterschied zwischen dem erwärmten Wasser, das in den Ablauf gelangt, und der Umgebung des Warmwasserbereiters verringert. Folglich werden dadurch auch die Wärmeverluste im Bereich des Ablaufs bereits an seiner Anschlussstelle reduziert.

Erfindungsgemäß wird weiter vorgeschlagen, dass der Ablauf einen Abschnitt aufweist, der seinem horizontal verlaufenden Anschluss an der Seitenwand des Grundbehälters in Entnahmerichtung folgt, wobei dieser Abschnitt im Wesentlichen vertikal nach unten verläuft. Die Entnahmerichtung verläuft in dem Ablauf von dem Grundbehälter zu einer Zapfstelle. Wärmere Wasserschichten können dabei nicht weiter in Entnahmerichtung in den Ablauf strömen, da sich in dem vertikal verlaufenden Abschnitt unten kältere Wasserschichten befinden als oben. Aufgrund der geringeren Dichte der wärmeren Wasserschichten oben in dem vertikalen Abschnitt im Vergleich zu der Dichte der kälteren Wasserschichten unten in dem vertikalen Abschnitt können die wärmeren Wasserschichten nicht in der Schwerkraftrichtung nach unten gelangen. Diese Anordnung ermöglicht somit eine natürliche Wärmebremse, da sich nur kältere Wasserschichten in Entnahmerichtung bewegen können.

Mögliche Wärmeverluste werden weiter dadurch reduziert, dass erfindungsgemäß vorgeschlagen wird, dass sich der vertikal nach unten verlaufende Abschnitt des Ablaufs durch eine Ummantelung aus einem wärmeisolierenden Material erstreckt. Die Ummantelung bewirkt eine thermische Isolierung des Ablaufs im Bereich des vertikal verlaufenden Abschnitts. Dadurch wird auch bei einem vergleichsweisen großen Temperaturunterschied zwischen dem Wasser in dem Ablauf und der Umgebung die an die Umgebung abgegebene Wärmemenge deutlich verringert.

Bei einer möglichen Weiterbildung weist der Ablauf einen Abschnitt auf, der dem Grundbehälter abgewandt ist, sich somit weiter stromabwärts in der Entnahmerichtung befindet, und horizontal aus der Ummantelung heraus erstreckt. Dieser Abschnitt verläuft folglich senkrecht zu einer möglichen Aufwärtsbewegung des erwärmten Wassers innerhalb des vertikalen Abschnitts des Ablaufs. Diese Anordnung verhindert weiter, dass sich erwärmtes Wasser in der Entnahmerichtung bewegt.

Der Ablauf ist zumindest teilweise und bevorzugt vollständig aus Kunststoff hergestellt. Der Ablauf ist zumindest teilweise aus einem Material hergestellt, das ausgewählt ist aus der Gruppe der Polyarylsulfone. Beispielsweise ist der Ablauf zumindest teilweise aus Polyphenylsulfon hergestellt. Alternativ oder zusätzlich kann der Ablauf aus vernetztem Polyethylen hergestellt sein. Das Material des Ablaufs weist insbesondere eine Wärmeleitfähigkeit von 0,05 W/(m*K) bis 0,50 W/(m*K), bevorzugt von 0,05 W/(m*K) bis 0,40 W/(m*K) und noch bevorzugter von 0,05 W/(m*K) bis 0,30 W/(m*K) auf, beispielsweise 0,20 W/(m*K). Diese vorteilhafte Ausbildung des Ablaufs weist im Vergleich zu einem Ablauf, der aus Metall hergestellt ist, eine deutlich geringere Wärmeleitfähigkeit auf. Somit werden mögliche Wärmeverluste weiter verringert.

Die Ummantelung umgibt den Grundbehälter zumindest an der Seitenwand. Dadurch werden Wärmeverluste im Bereich des Grundbehälters reduziert. Die Ummantelung weist einen Abschnitt auf, durch den sich der Ablauf erstreckt, wobei der Abschnitt der Ummantelung dicker als andere Abschnitte der Ummantelung ist. Bei dieser Ausbildung kann der Ablauf durch den dicksten Bereich der Ummantelung geführt werden. Dies kann beispielsweise dadurch realisiert werden, dass die Ummantelung einen im Wesentlichen elliptisch geformten Außenumfang aufweist. Entsprechend ist der Ablauf über eine möglichst lange Strecke von dem isolierenden Material umgeben, so dass auch bei einem vergleichsweisen großen Temperaturunterschied zwischen dem Wasser in dem Ablauf und der Umgebung die an die Umgebung abgegebene Wärmemenge deutlich verringert wird.

Bei einer Weiterbildung ist der Ablauf als Rohr ausgebildet. Diese Ausbildung erlaubt eine einfache Herstellung, insbesondere in dem Fall, in dem das Rohr aus Kunststoff hergestellt wird. Bei einem aus Kunststoff hergestellten Rohr als Ablauf ist es möglich, dass sich der Ablauf innerhalb der Ummantelung vollständig horizontal erstreckt. Mit anderen Worten ist derjenige Teil des Ablaufs, der sich innerhalb der Ummantelung befindet, vollständig horizontal angeordnet und ein sich vertikal nach unten erstreckender Abschnitt kann in diesem Fall entfallen.

Bei einer Weiterbildung weist der Grundbehälter kann eine bestimmte Höhe auf, wobei der Ablauf an der Seitenwand an einer Position angebracht ist, die sich in einem oberen Drittel bezogen auf die Höhe des Grundbehälters befindet. Diese Ausbildung bewirkt einen Anschluss des Ablaufs in einem Abschnitt des Grundbehälters, in dem sich die wärmeren Wasserschichten bedingt durch Konvektion befinden. Dadurch wird sichergestellt, dass bei einer Entnahme von erwärmtem Wasser, die wärmeren Wasserschichten zu der Zapfstelle gelangen.

Weitere optionale Einzelheiten und Merkmale der vorliegenden Erfindung ergeben sich aus der nachfolgenden Beschreibung bevorzugter Ausführungsbeispiele, welche schematisch in den Zeichnungen dargestellt sind.

### Es zeigen:

- Figur 1: eine perspektivische Seitenansicht eines Warmwasserbereiters gemäß einer ersten Ausführungsform der Erfindung,
- Figur 2: eine Längsschnittansicht des Warmwasserbereiters gemäß der ersten Ausführungsform der Erfindung,
- Figur 3: eine perspektivische Seitenansicht eines Warmwasserbereiters gemäß einer zweiten Ausführungsform der Erfindung,
- Figur 4: eine perspektivische Seitenansicht eines Warmwasserbereiters gemäß einer dritten Ausführungsform der Erfindung,
- Figur 5: eine Querschnittsansicht des Warmwasserbereiters gemäß der dritten Ausführungsform der Erfindung,
- Figur 6: eine Draufsicht auf einen Warmwasserbereiter gemäß einer vierten Ausführungsform der Erfindung,
- Figur 7: eine Draufsicht auf einen Warmwasserbereiter gemäß einer fünften Ausführungsform der Erfindung, und
- Figur 8: eine perspektivische Seitenansicht auf einen Warmwasserbereiter gemäß einer sechsten Ausführungsform der Erfindung.
Ausführungsformen der Erfindung

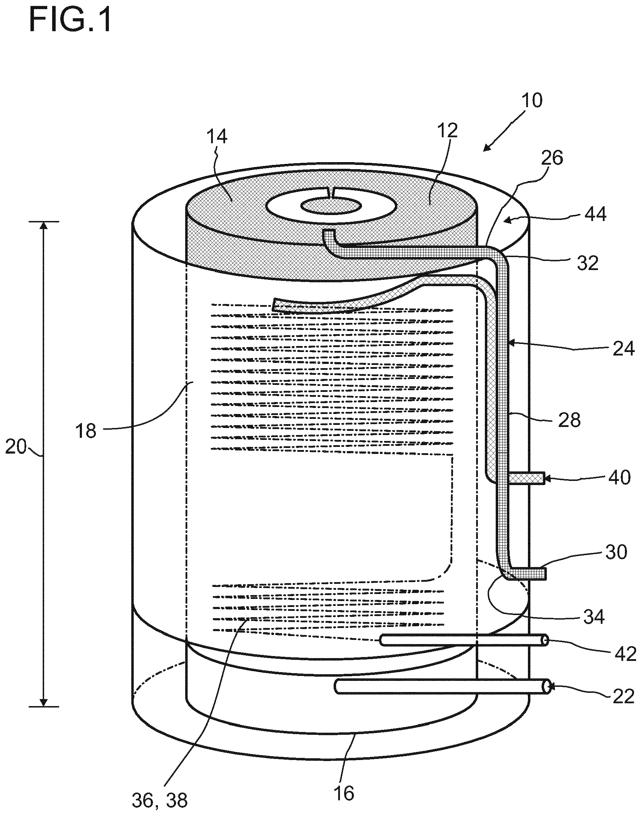

Figur 1 zeigt eine perspektivische Seitenansicht eines erfindungsgemäßen Warmwasserbereiters 10 gemäß einer ersten Ausführungsform. Der Warmwasserbereiter 10 weist einen Grundbehälter 12 zur Aufnahme von Wasser auf.

Der Grundbehälter 12 ist beispielsweise ein zylindrischer Behälter mit einer Oberseite 14, einer Unterseite 16 und einer Seitenwand 18, die den Zylindermantel bildet. Der Grundbehälter 12 ist aus einem Material hergestellt, das geeignet ist, die Erfordernisse der Trinkwasserverordnung in Deutschland zu erfüllen. Beispielsweise ist der Grundbehälter aus Metall hergestellt. Die Oberseite 14 bildet einen Deckel des Grundbehälters 12. Die Unterseite 16 bildet einen Boden des Grundbehälters 12. Der Grundbehälter 12 wird beispielsweise so aufgebaut, dass seine Zylinderachse parallel zur Schwerkraftrichtung verläuft. Allgemein wird ein Aufbau vorgeschlagen, bei dem die Seitenwand 18 parallel zur Schwerkraftrichtung orientiert ist. Der Grundbehälter weist eine Höhe 20 auf, die durch einen Pfeil angedeutet ist. Die Höhe 20 erstreckt sich ebenfalls parallel zur Schwerkraftrichtung.

Der Grundbehälter 12 weist mindestens einen Zulauf 22 für zu erwärmendes Wasser und mindestens einen Ablauf 24 für erwärmtes Wasser auf. Der Ablauf 24 erstreckt sich zu einer nicht näher gezeigten Entnahme- oder Zapfstelle. Der Zulauf 22 ist beispielsweise als gerades Rohr ausgebildet und in der Nähe der Unterseite 16 an den Grundbehälter 12 angeschlossen oder angebracht. Beispielsweise erstreckt sich der Zulauf 22 die Seitenwand 18 durchdringend in das Innere des Grundbehälters 12.

Der Ablauf 24 ist an der Seitenwand 18 des Grundbehälters 12 im Wesentlichen horizontal angeschlossen oder angebracht. Insbesondere ist der Ablauf 24 an einer Position 26 an der Seitenwand 18 angebracht, die sich in einem oberen Drittel bezogen auf die Höhe 20 des Grundbehälters 12 befindet. Der Ablauf 24 weist mindestens einen Abschnitt 28 auf, der sich im Wesentlichen vertikal nach unten erstreckt. Beispielsweise erstreckt sich der Abschnitt 28 des Ablaufs bis zur Mitte oder einem unteren Drittel des Grundbehälters 12 bezogen auf die Höhe 20. In Entnahmerichtung, d.h. in Richtung zu der Zapfstelle gesehen, folgt dem vertikal verlaufenden Abschnitt 28 ein horizontal erstreckender Abschnitt 30. Beispielsweise ist der Ablauf 24 als Rohr ausgebildet, das an zwei Stellen 32, 34 um im Wesentlichen 90° gebogen ist. Der Ablauf 24 ist zumindest teilweise aus Metall hergestellt. Beispielsweise ist der Ablauf 24 aus Eisen oder Kupfer hergestellt.

Der Warmwasserbereiter 10 weist weiter einen Heizkörper 36 auf. Der Heizkörper 36 ist beispielsweise in Form einer Heizwendel 38 ausgebildet, die im Inneren des Grundbehälters 12 angeordnet ist. Die Heizwendel 38 weist einen Eingang 40 und einen Ausgang 42 auf, die in Form von Rohren durch die Seitenwand 18 hindurch nach außen geführt sind. Der Eingang 40 ist dabei oberhalb des Ausgangs 42 angeordnet. Die Heizwendel 38 ist beispielsweise als Wärmetauscher ausgebildet. Beispielsweise wird von einer nicht näher gezeigten zentralen Heizungsanlage erzeugtes warmes Wasser durch den Eingang 40 in die Heizwendel 38 geleitet. Im Inneren des Grundbehälters 12 gibt die Heizwendel 38 dann die Wärme an das zu erwärmende Wasser im Inneren des Grundbehälters 12 ab, das durch den Zulauf 22 zugeführt wurde und sich dadurch erwärmt. Das im Inneren der Heizwendel 38 abgekühlte Wasser wird dann durch den Ausgang 42 wieder der zentralen Heizungsanlage zum erneuten Erwärmen zugeführt. Bedingt durch die Konvektion wird das zu erwärmende Wasser im Inneren des Grundbehälters dabei im Gegenstrom von der Heizwendel 38 erwärmt. Es versteht sich, dass anstelle der Heizwendel 38 auch eine andere Art von Heizkörper vorgesehen sein kann. Beispielsweise kann an der Unterseite 16 des Grundbehälters 12 ein Heizkörper 36 vorgesehen sein, der aus Kupfer hergestellt ist und mehrere vertikal verlaufende Schleifen aufweist. Auch sind elektrisch betriebene Heizkörper 36 einsetzbar.

Der Warmwasserbereiter 10 weist weiter eine Ummantelung 44 auf. Die Ummantelung 24 ist zumindest teilweise aus einem wärmeisolierenden Material hergestellt und umgibt den Grundbehälter 12 zumindest teilweise. Beispielsweise ist die die Ummantelung 44 ebenfalls zylindrisch ausgebildet und umgibt den Grundbehälter 12 allseitig. Lediglich zur Veranschaulichung der Position des Grundbehälters 12 innerhalb der Ummantelung 44 ist der Grundbehälter 12 mit der Oberseite 14 angedeutet, auch wenn die Oberseite 14 in Wirklichkeit ebenfalls von der Ummantelung 44 bedeckt ist. Die Ummantelung 44 ist beispielsweise aus vollständig Polyurethan hergestellt.

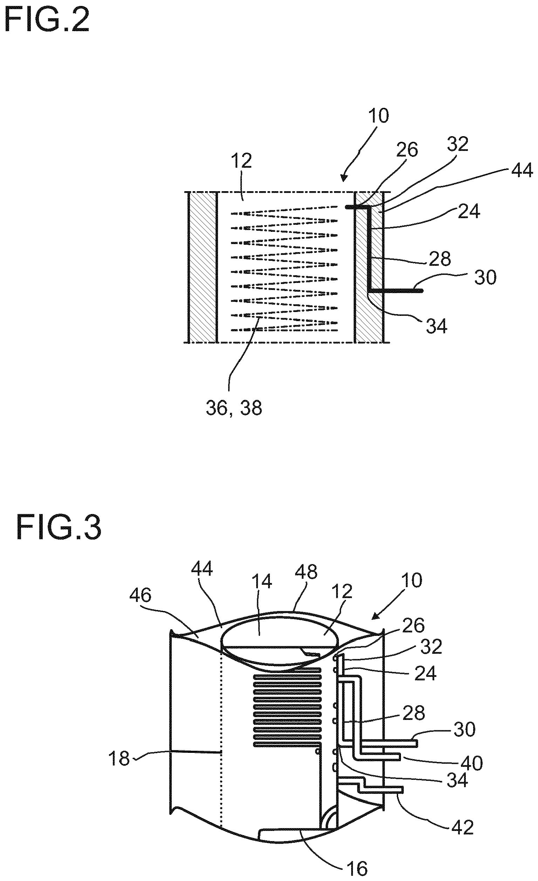

**Figur** 2 zeigt eine Längsschnittansicht des Warmwasserbereiters 10. Der Schnitt verläuft dabei parallel zur Schwerkraftrichtung bzw. parallel zur Zylinderachse des Grundbehälters 12. Wie in Figur 2 zu erkenn ist, erstreckt sich der Ablauf 24 durch die Ummantelung 24 hindurch. Insbesondere erstreckt sich der Abschnitt 28 des Ablaufs 24 innerhalb der Ummantelung 44 vertikal nach unten. Der Abschnitt 30 des Ablaufs 24 erstreckt sich horizontal aus der Ummantelung 44 heraus. Der Abschnitt 30 sowie der Ablauf 24 in seiner weiteren Erstreckung weg von dem Grundbehälter kann ebenfalls eine aus einem wärmeisolierenden Material hergestellte Ummantelung aufweisen.

Dadurch, dass der Ablauf 24 in einem oberen Drittel des Grundbehälters 12 in horizontaler Richtung angebracht ist, kann das bedingt durch Konvektion aufsteigende erwärmte Wasser nicht so leicht in den Ablauf 24 gelangen. Da der Ablauf 24 ferner den vertikal nach unten verlaufenden Abschnitt 28 aufweist, kann wärmeres Wasser nicht zu dem Abschnitt 30 des Ablaufs 24 gelangen, sondern nur kühleres Wasser. Entsprechend kann der Ablauf 24 weniger Wärme an seine Umgebung abgeben.

Der Warmwasserbereiter 10 kann bautechnische Alternativen aufweisen, wie nachstehend näher erläutert wird. Beispielsweise ist der Ablauf 24 an der Oberseite 14 angebracht und weist dann den Abschnitt 28 auf, der sich innerhalb der Ummantelung 44 vertikal nach unten erstreckt. Ein solcher Warmwasserbereiter fällt jedoch nicht unter Schutzbereich der Ansprüche.

Der Ablauf 24 ist zumindest teilweise aus Kunststoff hergestellt. Bei einem aus Kunststoff hergestellten Ablauf 24 ist es möglich, dass sich der Ablauf 24 innerhalb der Ummantelung 44 vollständig horizontal erstreckt. Mit anderen Worten ist derjenige Teil des Ablaufs, der sich innerhalb der Ummantelung 44 befindet, vollständig horizontal angeordnet und ein sich vertikal nach unten erstreckender Abschnitt kann in diesem Fall entfallen. Der Ablauf 24 kann auch aus einer Kombination aus Metall und Kunststoff hergestellt sein. Der Kunststoff ist ausgewählt aus der Gruppe der Polyarylsulfone. Der Ablauf 24 kann beispielsweise aus Polyphenylsulfon hergestellt sein. Alternativ oder zusätzlich kann der Ablauf 24 aus vernetztem Polyethylen hergestellt sein. Dadurch weist der Ablauf 24 eine Wärmeleitfähigkeit von 0,05 W/(m*K) bis 0,30 W/(m*K), bevorzugt von 0,05 W/(m*K) bis 0,25 W/(m*K) und noch bevorzugter von 0,05 W/(m*K) bis 0,20 W/(m*K) auf. Beispielsweise ist der Ablauf 24 aus Polyphenylsulfon hergestellt, das eine Wärmeleitfähigkeit von 0,19 W/(m*K) bis 0,22 W/(m*K) aufweist.

Der Effekt der deutlichen Verminderung der Wärmeverluste wird weiter dadurch verstärkt, dass der Ablauf 24 aus den oben genannten Kunststoffen hergestellt ist, die eine deutlich geringere Wärmeleitfähigkeit als Metall aufweisen. So weist beispielsweise unlegierter Stahl eine Wärmeleitfähigkeit von 48 W/(m*K) bis 58 W/(m*K) oder Kupfer eine Wärmeleitfähigkeit von 240 W/(m*K) bis 380 W/(m*K) auf. Aufgrund der geringeren Wärmeleitfähigkeit des Kunststoffs im Vergleich zu Metall kann bei einem aus Kunststoff hergestellten Ablauf 24 der Abschnitt 28, der sich innerhalb der Ummantelung 44 vertikal nach unten erstreckt, entfallen, ohne dass es zu deutlichen Wärmeverlusten kommt. Diese Ausführungsform stellt eine Modifikation oder weitere mögliche Ausführungsform zu dem in Figur 1 und 2 gezeigten Warmwasserbereiter 10 dar.

Figur 3 zeigt eine perspektivische Seitenansicht eines Warmwasserbereiters 10 gemäß einer zweiten Ausführungsform. Nachfolgend werden lediglich die Unterschiede zu der ersten Ausführungsform beschrieben und gleiche Bauteile sind mit gleichen Bezugszeichen versehen.

Wie sich aus Figur 3 ergibt, weist die Ummantelung 44 mindestens einen Abschnitt 46 auf, durch den sich der Ablauf 24 erstreckt. Der Abschnitt 46 der Ummantelung 44 ist dicker als andere Abschnitte 48 der Ummantelung 44. Die Dicke des Abschnitts 46 wird dabei senkrecht zu der Seitenwand 18 bestimmt. Der Abschnitt 46 der Ummantelung 44 kann sich dabei mit zunehmender Entfernung von dem Grundbehälter 12 verjüngen. Beispielsweise weist die Ummantelung 44 einen spitz-elliptischen bzw. blattförmigen Querschnitt senkrecht zur Schwerkraftrichtung gesehen auf. Insbesondere erstreckt sich der Abschnitt 28 des Ablaufs 24 innerhalb des dickeren Abschnitts 46 der Ummantelung 44 vertikal nach unten. Der Abschnitt 30 des Ablaufs 24 erstreckt sich horizontal aus der dem dickeren Abschnitt der Ummantelung 44 heraus. Die Ummantelung 44 kann insbesondere spiegelsymmetrisch ausgebildet sein. Beispielsweise weist die Ummantelung 44 über den Grundbehälter 12 gegenüberliegend einen weiteren Abschnitt 46 auf, der dicker als die anderen Abschnitte 48 ausgebildet ist. Wie in Figur 3 weiter angedeutet ist, kann der Grundbehälter 12 mehr als einen Ablauf 24 aufweisen. Lediglich beispielhaft sind zwei Abläufe 24 dargestellt, die jeweils zu einer Zapfstelle führen. Es versteht sich, dass auch mehr als zwei Abläufe 24 an dem Grundbehälter 12 angebracht sein können. Beispielsweise ist auch eine Stelle für das Anbringen eines Temperaturfühlers oder dergleichen vorgesehen. Dadurch, dass sich der Ablauf 24 durch den dicksten Abschnitt 46 der Ummantelung 44 erstreckt, werden die Wärmeverluste im Bereich des Ablaufs 24 weitgehend minimiert.

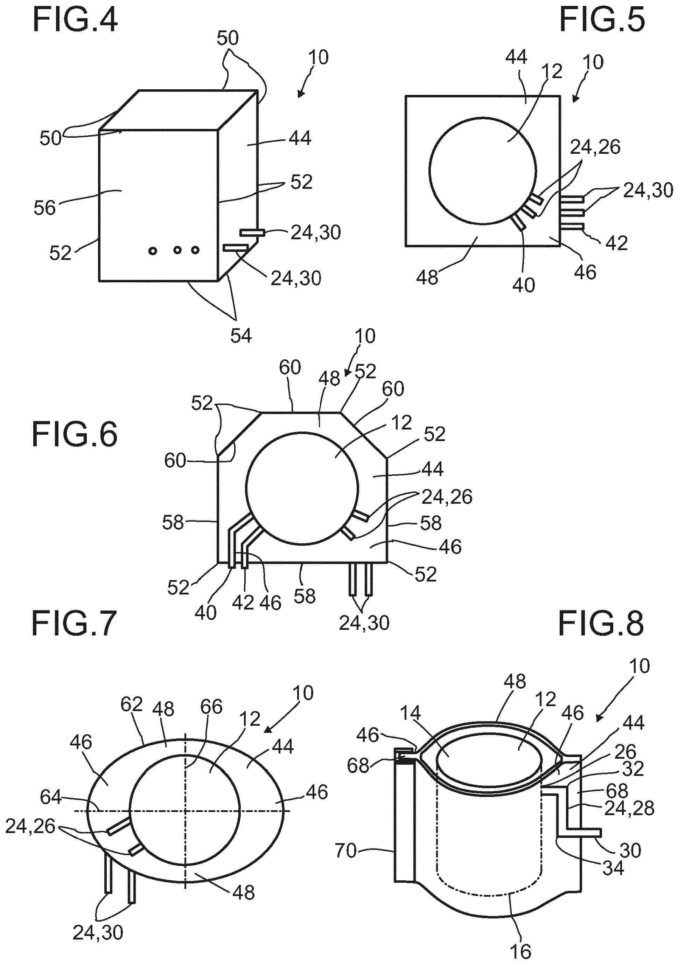

**Figur 4** zeigt eine perspektivische Seitenansicht eines Warmwasserbereiters 10 gemäß einer dritten Ausführungsform der Erfindung. Nachfolgend werden lediglich die Unterschiede zu den vorherigen Ausführungsformen beschrieben und gleiche Bauteile sind mit gleichen Bezugszeichen versehen.

Bei dem Warmwasserbereiter 10 gemäß der dritten Ausführungsform ist die Ummantelung 44 quaderförmig ausgebildet und umgibt den Grundbehälter 12 allseitig. Die Ummantelung 44 weist dadurch vier horizontal verlaufende Oberkanten 50, vier vertikal verlaufende Seitenkanten 52 und vier horizontal verlaufende Unterkanten 54 auf, die jeweils die Oberflächen der Quaderform verbinden. Auf Grund des vollständigen Einschlusses des Grundbehälters 12 in der Ummantelung 44 sind beispielsweise in der Darstellung der Figur 4 lediglich der Zulauf 22 und der Abschnitt 30 des Ablaufs 24 zu erkennen.

**Figur 5** zeigt eine Querschnittsansicht des Warmwasserbereiters 10 gemäß der dritten Ausführungsform. Der Schnitt verläuft dabei senkrecht zur Schwerkraftrichtung bzw. einer vertikalen Orientierung des Grundbehälters 12. Der Schnitt verläuft insbesondere durch den Ablauf 24 auf Höhe der Position 26, an der der Ablauf 24 horizontal an der Seitenwand 18 des Grundbehälters 12 angebracht ist. Wie in Figur 5 weiter angedeutet ist, kann der Grundbehälter 12 mehr als einen Ablauf 24 aufweisen. Lediglich beispielhaft sind zwei Abläufe 24 dargestellt, die jeweils zu einer Zapfstelle führen. Es versteht sich, dass auch mehr als zwei Abläufe 24 an dem Grundbehälter 12 angebracht sein können. Bei der dritten Ausführungsform erstrecken sich alle Abläufe 24 im Wesentlichen parallel in Richtung zu einer der vertikal verlaufenden Seitenkanten 52 der Ummantelung 44. Da die Seitenkanten 52 einen größeren Abstand von der Seitenwand 18 des Grundbehälters 12 als Seitenflächen 56 der Ummantelung 44 aufweisen, weist die Ummantelung 44 vier Abschnitte 46 auf, die dicker als andere Abschnitte 48 der Ummantelung 44 sind. Die Dicke der Abschnitte 46 wird dabei senkrecht zu der Seitenwand 18 bestimmt. Dadurch erstreckt sich auch bei der dritten Ausführungsform der Ablauf 24 durch einen dicksten Abschnitt 46 der Ummantelung 44, so dass die Wärmeverluste deutlich minimiert werden.

**Figur 6** zeigt eine Querschnittsansicht eines Warmwasserbereiters 10 gemäß einer vierten Ausführungsform. Nachfolgend werden lediglich die Unterschiede zu den vorherigen Ausführungsformen beschrieben und gleiche Bauteile sind mit gleichen Bezugszeichen versehen. Der Schnitt verläuft dabei senkrecht zur Schwerkraftrichtung bzw. einer vertikalen Orientierung des Grundbehälters 12. Der Schnitt verläuft insbesondere durch den Ablauf 24 auf Höhe der Position 26, an der der Ablauf 24 horizontal an der Seitenwand 18 des Grundbehälters 12 angebracht ist. Wie in Figur 6 weiter angedeutet ist, kann der Grundbehälter 12 mehr als einen Ablauf 24 aufweisen. Lediglich beispielhaft sind zwei Abläufe 24 dargestellt, die jeweils zu einer Zapfstelle führen. Es versteht sich, dass auch mehr als zwei Abläufe 24 an dem Grundbehälter 12 angebracht sein können.

Bei dem Warmwasserbereiter 10 gemäß der vierten Ausführungsform ist die Ummantelung 44 mehreckig ausgebildet. So weist die Ummantelung 44 bei der vierten Ausführungsform einen unregelmäßigen sechseckigen Querschnitt auf. Es versteht sich jedoch, dass die Ummantelung alternativ andere Querschnittsformen mit mehr als sechs Ecken aufweisen kann, wie beispielsweise siebeneckig, achteckig, neuneckig, zehneckig usw., wobei die jeweilige Form in Abhängigkeit von den räumlichen Gegebenheiten des jeweiligen Aufstellungsorts des Warmwasserbereiters abhängen kann. Die Ummantelung 44 weist dabei insbesondere drei Seitenflächen 58, die längere Abmessungen in einer horizontalen Richtung aufweisen als andere drei Seitenflächen 60. Die drei Seitenflächen 58 mit den längeren horizontalen Abmessungen sind miteinander über zwei Seitenkanten 52 verbunden. Zwei dieser drei Seitenflächen 58 mit den längeren horizontalen Abmessungen sind parallel zueinander orientiert. Bei der vierten Ausführungsform erstrecken sich alle Abläufe 24 im Wesentlichen parallel in Richtung zu einer der vertikal verlaufenden Seitenkanten 52 der Ummantelung 44, die zwei der drei Seitenflächen 58 mit den längeren horizontalen Abmessungen verbinden. Da die Seitenkanten 52 einen größeren Abstand von der Seitenwand 18 des Grundbehälters 12 als die Seitenflächen 58 der Ummantelung 44 aufweisen, weist die Ummantelung 44 mindesten zwei Abschnitte 46 auf, die dicker als andere Abschnitte 48 der Ummantelung 44 sind. Die Dicke der Abschnitte 46 wird dabei senkrecht zu der Seitenwand 18 bestimmt. Dadurch erstreckt sich auch bei der vierten Ausführungsform der Ablauf 24 durch einen dicksten Abschnitt 46 der Ummantelung 44, so dass die Wärmeverluste deutlich minimiert werden. Wie in Figur 6 weiter gezeigt ist, kann der Abschnitt 30, der sich horizontal aus der Ummantelung 44 heraus erstreckt, relativ zu der horizontalen Anbringung des Ablaufs 24 an der Seitenwand 18 des Grundbehälters 12 innerhalb einer horizontalen Ebene abgewinkelt verlaufen. Beispielsweise ist der Ablauf 24 senkrecht an der Seitenwand 18 des Grundbehälters 12 angebracht und verläuft zunächst an seiner Anbringungsposition 26 horizontal mit einem Winkel von jeweils 45 ° zu zwei benachbarten der drei Seitenflächen 58 mit den längeren horizontalen Abmessungen, wohingegen der Abschnitt 30 des Ablaufs horizontal und senkrecht zu einer der drei Seitenflächen 58 mit den längeren horizontalen Abmessungen orientiert ist.

**Figur 7** zeigt eine Querschnittsansicht eines Warmwasserbereiters 10 gemäß einer fünften Ausführungsform. Nachfolgend werden lediglich die Unterschiede zu den vorherigen Ausführungsformen beschrieben und gleiche Bauteile sind mit gleichen Bezugszeichen versehen. Der Schnitt verläuft dabei senkrecht zur Schwerkraftrichtung bzw. einer vertikalen Orientierung des Grundbehälters 12. Der Schnitt verläuft insbesondere durch den Ablauf 24 auf Höhe der Position 26, an der der Ablauf 24 horizontal an der Seitenwand 18 des Grundbehälters 12 angebracht ist. Wie in Figur 7 weiter angedeutet ist, kann der Grundbehälter 12 mehr als einen Ablauf 24 aufweisen. Lediglich beispielhaft sind zwei Abläufe 24 dargestellt, die jeweils zu einer Zapfstelle führen. Es versteht sich, dass auch mehr als zwei Abläufe 24 an dem Grundbehälter 12 angebracht sein können. Wie in Figur 7 weiter gezeigt ist, kann der Abschnitt 30, der sich horizontal aus der Ummantelung 44 heraus erstreckt, relativ zu der horizontalen Anbringung des Ablaufs 24 an der Seitenwand 18 des Grundbehälters 12 innerhalb einer horizontalen Ebene abgewinkelt verlaufen.

Bei dem Warmwasserbereiter 10 gemäß der fünften Ausführungsform ist die Ummantelung 44 mit einem elliptischen Außenumfang 62 bezogen auf die Schnittansicht der Figur 7 ausgebildet. Die Ummantelung weist dadurch zwei Abschnitte 46 auf, die sich parallel zu der längeren Halbachse 64 der elliptischen Form des Außenumfangs 62 der Ummantelung 44 erstrecken und dicker als Abschnitte 48 sind, die sich parallel zu der kürzeren Halbachse 66 erstrecken. Der Ablauf 24 erstreckt sich dabei durch einen der dickeren Abschnitte 46. Wie in Figur 7 dargestellt, muss der Ablauf 24 nicht parallel zu der längeren Halbachse 64 der elliptischen Form verlaufen. Beispielsweise ist der Ablauf 24 senkrecht an der Seitenwand 18 des Grundbehälters 12 angebracht und verläuft zunächst an seiner Anbringungsposition 26 horizontal mit einem Winkel von jeweils 45 ° zwischen den Halbachsen 64, 66, wohingegen der Abschnitt 30 des Ablaufs horizontal und parallel zu der kürzeren Halbachse 66 orientiert ist.

**Figur 8** zeigt eine perspektivische Seitenansicht eines Warmwasserbereiters 10 gemäß einer sechsten Ausführungsform. Nachfolgend werden lediglich die Unterschiede zu den vorherigen Ausführungsformen beschrieben und gleiche Bauteile sind mit gleichen Bezugszeichen versehen.

Der Warmwasserbereiter 10 gemäß der sechsten Ausführungsform ist eine Weiterbildung des Warmwasserbereiters der zweiten Ausführungsform, die in Verbindung mit Figur 3 beschrieben wurde. Wie sich aus Figur 8 ergibt, weist die Ummantelung 44 mindestens einen Abschnitt 46 auf, durch den sich der Ablauf 24 erstreckt. Der Abschnitt 46 der Ummantelung 44 ist dicker als andere Abschnitte 48 der Ummantelung 44. Die Dicke des Abschnitts 46 wird dabei senkrecht zu der Seitenwand 18 bestimmt. Der Abschnitt 46 der Ummantelung 44 kann sich dabei mit zunehmender Entfernung von dem Grundbehälter 12 verjüngen. Einer der dickeren Abschnitte 46 ist dabei an seinem freien Ende 68, d.h. das von dem Grundbehälter 12 abgewandte Ende, von einer Halterung 70 fixiert. Der Ablauf 24 erstreckt sich dabei durch denjenigen dickeren Abschnitt 46, dessen freies Ende 68 nicht von der Halterung 70 fixiert ist. Die Halterung 70 verhindert beispielsweise ein Aufplatzen der Ummantelung 44 im Bereich des freien Endes 68 oder dergleichen.

### Bezugszeichenliste

- 10: Warmwasserbereiter
- 12: Grundbehälter
- 14: Oberseite
- 16: Unterseite
- 18: Seitenwand
- 20: Höhe
- 22: Zulauf
- 24: Ablauf
- 26: Position der Anbringung
- 28: Abschnitt
- 30: Abschnitt
- 32: Stelle der Biegung
- 34: Stelle der Biegung
- 36: Heizkörper
- 38: Heizwendel
- 40: Eingang
- 42: Ausgang
- 44: Ummantelung
- 46: Abschnitt
- 48: Abschnitt
- 50: Oberkante
- 52: Seitenkante
- 54: Unterkante
- 56: Seitenfläche
- 58: Seitenfläche
- 60: Seitenfläche
- 62: Außenumfang
- 64: Halbachse
- 66: Halbachse
- 68: freies Ende
- 70: Halterung

## Patentansprüche

1. Warmwasserbereiter (10), mit
einem Grundbehälter (12) zur Aufnahme von Wasser, wobei der Grundbehälter (12) mindestens einen Zulauf (22) für zu erwärmendes Wasser und mindestens einen Ablauf (24) für erwärmtes Wasser aufweist, weiter mit einer Ummantelung (44), die zumindest teilweise aus einem wärmeisolierenden Material hergestellt ist und den Grundbehälter (12) zumindest teilweise umgibt, wobei sich der Ablauf (24) durch die Ummantelung (44) erstreckt, wobei der Ablauf (24) mindestens einen Abschnitt (28) aufweist, der sich innerhalb der Ummantelung (44) im Wesentlichen vertikal nach unten erstreckt, wobei die Ummantelung (44) den Grundbehälter (12) zumindest an einer Seitenwand (18) umgibt, wobei die Ummantelung (44) einen Abschnitt (46) aufweist, durch den sich der Ablauf (24) erstreckt, wobei der Abschnitt (46) der Ummantelung (44) dicker als andere Abschnitte (48) der Ummantelung (44) ist, **dadurch gekennzeichnet, dass** der Ablauf (24) zumindest teilweise aus Kunststoff hergestellt ist, wobei der Kunststoff ausgewählt ist aus der Gruppe der Polyarylsulfone, wobei der Ablauf (24) an einer Seitenwand (18) des Grundbehälters (12) im Wesentlichen horizontal angebracht ist.

2. Warmwasserbereiter (10) nach dem vorhergehenden Anspruch, wobei die Ummantelung (44) zumindest teilweise aus Polyurethan hergestellt ist.

3. Warmwasserbereiter (10) nach einem der vorhergehenden Ansprüche, wobei der Ablauf (24) einen Abschnitt (30) aufweist, der dem Grundbehälter (12) abgewandt ist und der sich horizontal aus der Ummantelung (44) heraus erstreckt.

4. Warmwasserbereiter (10) nach einem der vorhergehenden Ansprüche, wobei der Kunststoff eine Wärmeleitfähigkeit von 0,05 W/(m*K) bis 0,50 W/(m*K), bevorzugt von 0,05 W/(m*K) bis 0,40 W/(m*K) und noch bevorzugter von 0,05 W/(m*K) bis 0,30 W/(m*K) aufweist.

5. Warmwasserbereiter (10) nach einem der vorhergehenden Ansprüche, wobei die Ummantelung (44) einen im Wesentlichen elliptisch geformten Außenumfang (62) aufweist.

6. Warmwasserbereiter (10) nach einem der vorhergehenden Ansprüche, wobei der Ablauf (24) als Rohr ausgebildet ist.

7. Warmwasserbereiter (10) nach einem der vorhergehenden Ansprüche, wobei der Grundbehälter (12) eine Höhe (20) aufweist, wobei der Ablauf (24) an einer Seitenwand (18) an einer Position (26) angebracht ist, die sich in einem oberen Drittel bezogen auf die Höhe (20) des Grundbehälters (12) befindet.

## Claims

1. A water heater (10) with
a main container (12) for receiving water, the main container (12) having at least one inflow (22) for water to be heated and at least one outflow (24) for heated water, also with a jacketing (44), which is at least partially produced from a heat-insulating material and at least partially surrounds the main container (12), the outflow (24) extending through the jacketing (44), the outflow (24) having at least one portion (28) that extends substantially vertically downwardly within the jacketing (44), the jacketing (44) surrounding the main container (12) at least at a side wall (18), the jacketing (44) having a portion (46) through which the outflow (24) extends, the portion (46) of the jacketing (44) being thicker than other portions (48) of the jacketing (44), wherein the outflow (24) is at least partially produced from plastic, the plastic being selected from the group of polyarylsulfones, the outflow (24) being attached substantially horizontally to a side wall (18) of the main container (12).

2. The water heater (10) according to the preceding claim, the jacketing (44) being at least partially produced from polyurethane.

3. The water heater (10) according to one of the preceding claims, the outflow (24) having a portion (30) that is facing away from the main container (12) and extends horizontally out of the jacketing (44) .

4. The water heater (10) according to one of the preceding claims, the plastic having a thermal conductivity of 0.05 W/(m*K) to 0.50 W/(m*K), preferably of 0.05 W/(m*K) to 0.40 W/(m*K) and more preferably of 0.05 W/(m*K) to 0.30 W/(m*K).

5. The water heater (10) according to one of the preceding claims, the jacketing (44) having a substantially elliptical outer periphery (62).

6. The water heater (10) according to one of the preceding claims, the outflow (24) being formed as a pipe.

7. The water heater (10) according to one of the preceding claims, the main container (12) having a height (20), the outflow (24) being attached to a side wall (18) at a position (26) that is in an upper third with respect to the height (20) of the main container (12).

## Revendications

1. Chauffe-eau (10), muni
d'un contenant de base (12) pour la réception d'eau, le contenant de base (12) comprenant au moins une entrée (22) pour de l'eau à chauffer et au moins une sortie (24) pour de l'eau chauffée, en outre muni d'une enveloppe (44), qui est fabriquée au moins partiellement en un matériau isolant thermique et entoure au moins partiellement le contenant de base (12), la sortie (24) s'étendant au travers de l'enveloppe (44), la sortie (24) comprenant au moins une section (28), qui s'étend essentiellement à la verticale vers le bas au sein de l'enveloppe (44), l'enveloppe (44) entourant le contenant de base (12) au moins sur une paroi latérale (18), l'enveloppe (44) comprenant une section (46) au travers de laquelle la sortie (24) s'étend, la section (46) de l'enveloppe (44) étant plus épaisse que d'autres sections (48) de l'enveloppe (44), **caractérisé en ce que** la sortie (24) est fabriquée au moins partiellement en matière plastique, la matière plastique étant choisie dans le groupe des polyarylsulfones, la sortie (24) étant disposée essentiellement à l'horizontale sur une paroi latérale (18) du contenant de base (12).

2. Chauffe-eau (10) selon la revendication précédente, dans lequel l'enveloppe (44) est fabriquée au moins partiellement en polyuréthane.

3. Chauffe-eau (10) selon l'une quelconque des revendications précédentes, dans lequel la sortie (24) comprend une section (30), qui est détournée du contenant de base (12) et qui s'étend à l'horizontale hors de l'enveloppe (44).

4. Chauffe-eau (10) selon l'une quelconque des revendications précédentes, dans lequel la matière plastique présente une conductivité thermique de 0,05 W/(m*K) à 0,50 W/(m*K), de préférence de 0,05 W/(m*K) à 0,40 W/(m*K) et de manière encore davantage préférée de 0,05 W/(m*K) à 0,30 W/(m*K).

5. Chauffe-eau (10) selon l'une quelconque des revendications précédentes, dans lequel l'enveloppe (44) présente une périphérie extérieure (62) de forme essentiellement elliptique.

6. Chauffe-eau (10) selon l'une quelconque des revendications précédentes, dans lequel la sortie (24) est configurée sous la forme d'un tube.

7. Chauffe-eau (10) selon l'une quelconque des revendications précédentes, dans lequel le contenant de base (12) présente une hauteur (20), la sortie (24) étant disposée sur une paroi latérale (18) à une position (26), qui se trouve dans un tiers supérieur par rapport à la hauteur (20) du contenant de base (12) .
